# EUROPÄISCHE PATENTSCHRIFT

(11) **EP 3 483 408 B1**
(45) Veröffentlichungstag und Bekanntmachung des Hinweises auf die Patenterteilung: **31.03.2021**
(21) Anmeldenummer: 18194391.1
(22) Anmeldetag: 14.09.2018
(51) Int. Cl.: F02B 37/22, F02B 37/02

(54) **BRENNKRAFTMASCHINE UND VERFAHREN ZUM BETREIBEN DER BRENNKRAFTMASCHINE**
COMBUSTION ENGINE AND METHOD FOR OPERATING A COMBUSTION ENGINE
MOTEUR À COMBUSTION INTERNE ET PROCÉDÉ DE FONCTIONNEMENT DU MOTEUR À COMBUSTION INTERNE

(30) Priorität: 14.11.2017 DE 102017220192
(43) Veröffentlichungstag der Anmeldung: 15.05.2019
(73) Patentinhaber: Bayerische Motoren Werke Aktiengesellschaft, 80809 München (DE)
(72) Erfinder: Leinhos, Dirk Christian, 82194 Gröbenzell (DE); Schwarz, Christian, 81245 Muenchen (DE)

(56) Entgegenhaltungen:
- DE-A1-102012 023 118
- DE-A1-102014 016 877
- JP-A- S6 220 631

## Beschreibung

Die Erfindung betrifft eine Brennkraftmaschine gemäß dem Patentanspruch 1, eine Brennkraftmaschine gemäß dem Patentanspruch 2 und Verfahren zum Betreiben der Brennkraftmaschine gemäß den Patentansprüchen 6, 7 und 8.

Zum technischen Umfeld wird beispielsweise auf die Europäische Patentschrift EP 2 115 284 B1 hingewiesen. Aus dieser ist eine Brennkraftmaschine mit 8 Zylindern in V-Bauart, mit einer Abgasanlage mit einem ersten und einem zweiten Abgasturbolader bekannt, wobei von einem ersten, einem zweiten, einem dritten und einem vierten, in Reihe nebeneinander angeordneten Zylinder eine erste Zylinderbank und von einem fünften, einem sechsten, einem siebten und einem achten, in Reihe nebeneinander angeordneten Zylinder eine zweite, der ersten Zylinderbank gegenüberliegende Zylinderbank gebildet ist, wobei die Brennkraftmaschine von Zylinder zu Zylinder eine Zündfolge von 90° Kurbelwinkel aufweist, wobei die Abgasanlage einen ersten, einen zweiten, einen dritten und einen vierten Abgasstrang von den Zylindern zu den zwei Abgasturboladern aufweist, und wobei einem Abgasstrang jeweils zwei Zylinder und zwei Abgassträngen jeweils ein Abgasturbolader zugeordnet ist, wobei zwei, einem Abgasstrang zugeordnete Zylinder einen Zündabstand von 360° Kurbelwinkel aufweisen und dass der erste und der zweite, einem Abgasturbolader zugeordnete Abgasstrang eine um 180° Kurbelwinkel zueinander verschobene Zündfolge aufweist.

Weiter ist aus der europäischen Patentschrift EP 0 247 631 B1 eine Auspuffanlage eines Verbrennungsmotors bekannt. Dieser weist auf:
Eine Mehrzahl von einander unabhängiger Passagen, die jeweils einzeln mit einer Austrittsöffnung eines Zylinders des Motors verbunden sind und zu einer Verbindungsstelle mehrerer voneinander unabhängiger Passagen führen, und mit
wenigstens einer Verbindungspassage, die wenigstens zwei voneinander unabhängige Passagen an von der Verbindungsstelle stromauf gelegenen Stellen miteinander verbindet,
wobei die Verbindungspassage wenigstens zwei Abzweigarme beinhaltet, die jeweils von einer unabhängigen Passage an einer der genannten Stellen abzweigen und an dieser Stelle in Richtung auf die Austrittsöffnung gerichtet sind, und
in einem von der genannten Stelle stromab gelegenen Bereich der Äquivalenzdurchmesser der unabhängigen Passage geringer ist als stromauf an dieser Stelle.

Weiter wird zum technischen Umfeld auf die Patentschrift Nr. 7000941 aus der Deutschen Demokratischen Republik hingewiesen, aus der eine Leitvorrichtung für radial beaufschlagte Turbinenräder bekannt ist. Es wird eine Leitvorrichtung beansprucht, für radial beaufschlagte Turbinenräder, insbesondere für heiße Gase, wobei diese mindestens einen axial zur Turbinenachse verschiebbaren Leitschaufelkranz umfasst und dieser Leitschaufelkranz wahlweise und wenigstens teilweise derart in den Druckmittelstrom vor der Laufschaufelung mindestens eines Turbinenrads einer Turbine hineingeschoben werden kann, dass dadurch eine Änderung der Durchflussbedingungen für das Druckmittel, je nach Form, Richtung und Durchflussquerschnitten der Leitschaufeln erfolgt, zum Zwecke, dadurch das Turbinenlaufrad mit nach Menge,

Druck- und Temperatur veränderlicher Druckmittelenergie zu beaufschlagen.

Eine Segmentturbine ist beispielsweise aus der französischen Patentanmeldung FR 2 801 072 A1 bekannt, deren Fluten jedoch keine axiale Trennwand aufweisen und damit keine Zweipunkt-Variabilität des Abgas-Massenstroms ermöglicht.

Eine Zwillingstromturbine ist beispielsweise aus der Deutschen Offenlegungsschrift DE 10 2007 017 826 A1 bekannt.

Auch aus der Deutschen Offenlegungsschrift DE 10 2014 016 877 A1 und aus der Japanischen Offenlegungsschrift JP S62-20631A sind Brennkraftmaschinen mit vier Zylindern bekannt, bei welchen jeder Zylinder zwei Gaswechsel-Auslassventile aufweist.

Heutige bekannte Turbinen von Abgasturboladern mit variablem Abgas-Massenstrom sind typischerweise mit einem variablen Vorleitrad (VTG) ausgestattet und bisher nur für einflutige Turbinen ausgeführt. Aufgrund von erforderlichen Spielen der Leitschaufeln und deren Verstelleinrichtung, sind die ertragbaren Turbineneintrittstemperaturen von VTGs typischerweise niedriger als bei Turbinen mit fester Geometrie, insbesondere für Brennkraftmaschinen, die nach dem Ottoprinzip arbeiten. Ausführungen, die hohe Temperaturen vertragen sind wegen der erforderlichen hoch temperaturfesten Werkstoffe wesentlich teurer. Es existiert somit aktuell keine kostengünstige Lösung für einen variablen Massenstrom für zweiflutige Turbinen, auch Twin-Scroll-Turbinen genannt.

Aufgabe der vorliegenden Erfindung ist es, eine kostengünstige Lösung für einen variablen Abgas-Massenstrom für zweiflutige Turbinen aufzuzeigen.

Diese Aufgabe wird durch die Merkmale der Patentansprüche 1 und 2 gelöst.

Vorteilhafte Weiterbildungen der Erfindung sind in den Unteransprüchen beschrieben.

Um sowohl eine Flutentrennung, als auch eine Zweipunkt-Variabilität des Abgas-Massenstroms zu ermöglichen, wird erfindungsgemäß eine Brennkraftmaschine mit einer Segmentturbine vorgeschlagen, deren Voluten zusätzlich eine axiale Trennwand aufweisen (Twin-Scroll) und die an die Auslasskanäle angeschlossen ist, wobei jeder Auslasskanal für ein Gaswechsel-Auslassventil vorgesehen ist. Es handelt sich somit um eine "segmentierte Zwillingsstromturbine".

Unter einer segmentierten Zwillingsstromturbine wird eine Turbine eines Abgasturboladers verstanden, deren Turbinengehäuse über zwei weitgehend gegenüberliegende Twin-Scrolls verfügt. Gegenüber einem Twin-Scroll sind bei einer segmentierten Zwillingsstromturbine die Flutentrennung um 90° gedreht, d. h. die Trennwand erstreckt sich koaxial zu einer Drehachse der Turbine. Jeder Twin-Scroll leitet Abgas radial umlaufend auf das Turbinenrad, wobei die zwei Scrolls des ersten Twin-Scroll axial voneinander beabstandet sind und den Scrolls des zweiten Twin-Scroll gegenüber liegen. Somit bilden der erste Scroll des ersten Twin-Scrolls eine erste Abgaseintrittsebene auf das Turbinenrad und der zweite Scroll des zweiten Twin-Scrolls eine zweite, von der ersten Abgaseintrittsebene axial beabstandete zweite Abgaseintrittsebene auf das Turbinenrad. Alle vier Scrolls sind von dem Turbinengehäuse bis zum Turbinenrad vollständig voneinander getrennt. Eine gattungsgemäße segmentierte Zwillingstromturbine ist beispielsweise aus der deutschen Offenlegungsschrift DE 10 2011 016 528 A1 bekannt. Dieses bekannte Turbinengehäuse weist jedoch keine Flutenverbindungen auf.

Das Abschalten der Fluten kann grundsätzlich über die Absperrorgane erfolgen. Als Absperrorgane können beispielsweise Klappen, Ventile oder Walzen zum Einsatz kommen, wie sie aus dem Stand der Technik bekannt sind. Der Einsatz ist prinzipiell bei Reihenvierzylinder-, und Reihensechszylinder-Brennkraftmaschinen, sowie bei Achtzylinder- und Zwölfzylinder-Brennkraftmaschinen mit V-Bauform mit je einem Turbolader pro Zylinderbank möglich.

Die Erfindung ermöglicht die Nutzung einer Teilturbine mit besserer Ausnutzung des Abgasimpulses und der Aufrechterhaltung der Flutentrennung und auch Schaltungen für z. B. den Betrieb mit einem abgeschalteten Zylinder, sowie durch Umschalten die Nutzung der gesamten Turbine zur Erzielung der Nennleistung. Damit kann z. B. die Turbine insgesamt größer ausgelegt werden, um den Gegendruck in der Nennleistung zu reduzieren und gleichzeitig in der Teillast einen höheren Auflade- und Wirkungsgrad zu erreichen. Eine besonders bevorzugte Ausführungsvariante ist die Zusammenschaltung der einzelnen Fluten für einen Volllastbetrieb der Brennkraftmaschine bei der der Abgasgegendruck in vorteilhafter Weise abgesenkt wird.

Die Brennkraftmaschine gemäß Patentanspruch 2 ist für eine 6-Zylinder Brennkraftmaschine vorgesehen und kann ebenfalls für eine Zwölfzylinder-Brennkraftmaschine der V-Bauart eingesetzt werden.

Die Ausgestaltung gemäß Patentanspruch 3 ist eine besonders bevorzugte Ausführungsvariante für die Zusammenschaltung der einzelnen Fluten für einen Volllastbetrieb der Brennkraftmaschine bei der der Abgasgegendruck in vorteilhafter Weise abgesenkt wird.

Die Ausgestaltung gemäß Patentanspruch 4 ist ein besonders bevorzugtes Ausführungsbeispiel.

Die Ausgestaltung gemäß Patentanspruch 5 ist eine bevorzugte Ausführungsvariante, wobei das Turbinenlaufrad aus zwei starr gekoppelten, axial zueinander angeordneten Turbinenlaufrädern besteht, die gemeinsam ein Verdichterrad des Abgasturboladers antreiben.

Mit den erfindungsgemäßen Verfahren gemäß Patentanspruch 6 ist der Teillastbetrieb der Brennkraftmaschine darstellbar.

Mit den erfindungsgemäßen Verfahren gemäß den Patentansprüchen 7 und 8 ist der Volllastbetrieb der Brennkraftmaschine bei geringstem Abgasgegendruck darstellbar.

Im Folgenden ist die Erfindung anhand von vier Figuren näher erläutert.
- Figur 1: zeigt schematisch eine vierzylindrige, erfindungsgemäße Brennkraftmaschine für eine erste Betriebsart.
- Figur 2: zeigt schematisch eine vierzylindrige erfindungsgemäße Brennkraftmaschine für eine zweite Betriebsart.
- Figur 3: zeigt schematisch eine vierzylindrige, erfindungsgemäße Brennkraftmaschine für eine dritte Betriebsart.
- Figur 4: zeigt schematisch eine vierzylindrige, erfindungsgemäße Brennkraftmaschine für eine vierte Betriebsart.

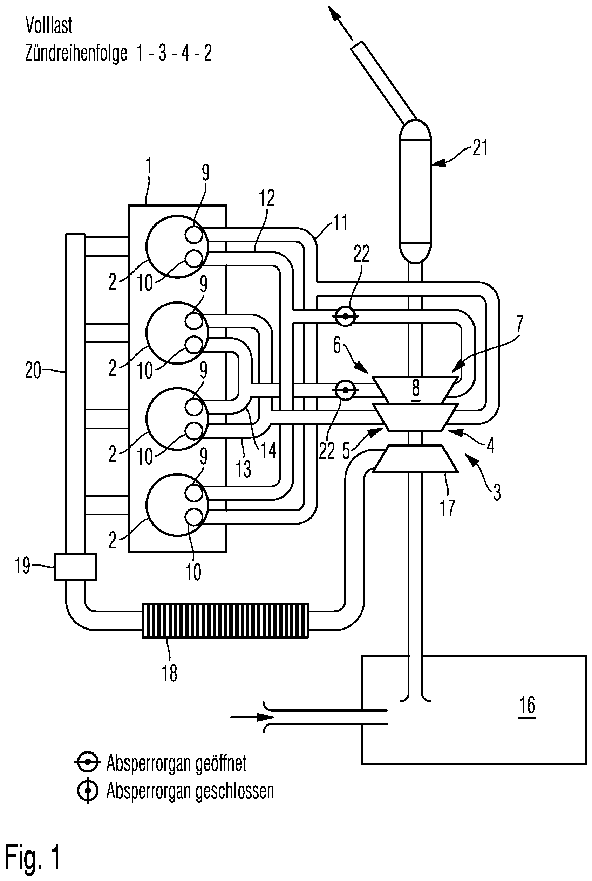

Im Folgenden gelten in den Figuren 1 bis 4 für gleiche Bauelemente die gleichen Bezugsziffern.

Fig. 1 zeigt eine erste Betriebsart für eine vierzylindrige, erfindungsgemäße Brennkraftmaschine 1. Eine Frischluft wird durch ein nicht beziffertes Ansaugsystem zuerst in einen Ansauggeräuschdämpfer 16 gefördert und durchläuft anschließend einen Verdichter 17 eines Abgasturboladers 3, von dem die Frischluft verdichtet und aufgeheizt wird. Ein Einströmen der Frischluft ist durch einen Pfeil in Richtung Ansauggeräuschdämpfer 16 dargestellt. Die aufgeheizte Frischluft wird anschließend in einem Ladeluftkühler 18 gekühlt und weiter durch eine Drosselklappe 19 in einen Luftsammler 20 gefördert und von dort in vier Zylinder 2 der Brennkraftmaschine 1 gefördert und verbrannt.

Jeder Zylinder 2 verfügt über zwei Gaswechsel-Auslassventile 9, 10 die für jeden Zylinder 2 gleich beziffert sind. Für jedes Gaswechsel-Auslassventil 9, 10 ist jeweils ein eigenes Abgasrohr 11, 12, 13, 14 vorgesehen, wobei jeweils ein Auslass-Gaswechselventil 9, 10 von zwei Zylindern 2 auf ein Abgasrohr 11, 12, 13, 14 zusammengeschalten sind und dann in vier Abgaseinlässe 4, 5, 6, 7 eines Abgasturboladers 3 münden. Somit werden jeweils zwei Zylinder 2 zu einer Zylindergruppe zusammengefasst. Im vorliegenden Ausführungsbeispiel die Zylinder 1 und 4 und die Zylinder 2 und 3 (gemäß der Zündreihenfolge nummeriert). Die Zusammenfassung erfolgt entsprechend einer Zündreihenfolge von Zylinder 1 zu Zylinder 3 zu Zylinder 4 zu Zylinder 2, mit einem gleichmäßigen Zündabstand. Bei einer abweichenden Zündreihenfolge erfolgt die Zylinderzusammenfassung wieder derart, dass ein gleichmäßiger Zündabstand vorliegt.

Jedes der Abgasrohre 11, 12, 13, 14 ist mit einem separaten Abgaseinlass 4, 5, 6, 7 in einem nicht bezifferten Turbinengehäuse des Abgasturboladers 3, in dem eine Turbine 8 drehbar gelagert ist und den Verdichter 17 antreibt, Abgas führend verbunden. Das Abgas verlässt das Turbinengehäuse durch einen nicht bezifferten Abgasstrang in dem eine Abgasreinigungsanlage 21 angeordnet ist. Das austretende Abgas ist mit einem Pfeil schematisch dargestellt.

Zusammengefasst kann gesagt werden, dass je zwei Zylinder 2 zu einer Zylindergruppe zusammengefasst sind und jeder Abgaseinlass 4, 5, 6, 7, mit einer Zylindergruppe durch ein Abgasrohr 11, 12, 13, 14 über je ein Gaswechselauslassventil 9, 10 je Zylinder 2 Abgas führend verbindbar ist und die Turbine 8 alle 180° Kurbelwinkel mit Abgas beaufschlagbar ist.

In dem vorliegenden Ausführungsbeispiel werden bei höherer Last oder beim Volllastbetrieb der Brennkraftmaschine sämtliche Gaswechselauslassventile 9, 10 betätigt. In den Abgasrohren 12 und 14 befindliche Absperrorgane 22, wie z. B. Klappen oder Drehwalzen, werden bei dieser Betriebsart geöffnet, damit eine maximale Abgasmenge die Turbine 8 des Abgasturboladers 3 antreiben kann.

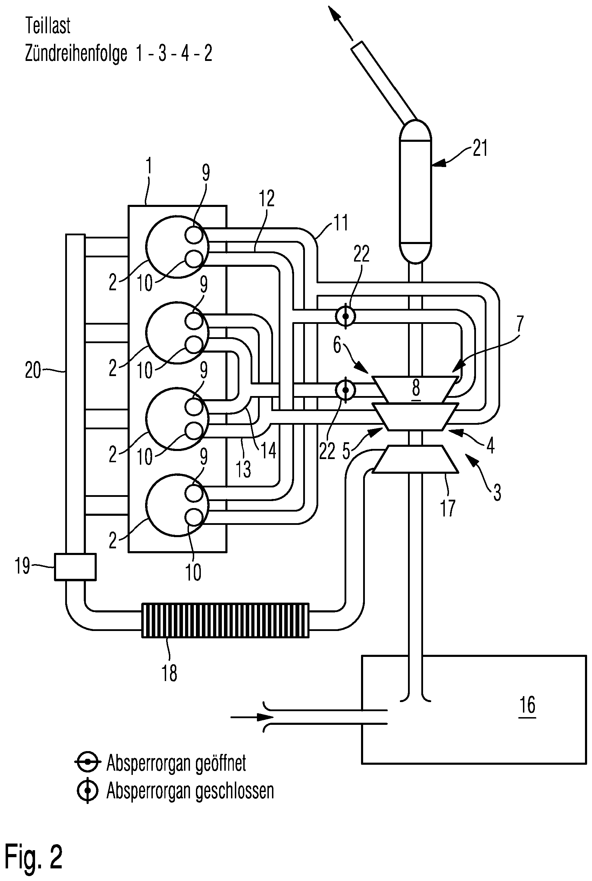

Die grundsätzliche Funktion der erfindungsgemäßen Brennkraftmaschine 1 gilt auch für die weiteren Figuren 2 bis 4, und wird bei denen nicht nochmals erörtert.

Figur 2 zeigt eine zweite Betriebsart für eine erfindungsgemäße, vierzylindrige Brennkraftmaschine 1. Das zweite Ausführungsbeispiel unterscheidet sich vom ersten Ausführungsbeispiel dadurch, dass die Absperrorgane 22 in den Abgasrohren 12, 14 geschlossen sind. Dies bedeutet, dass die Brennkraftmaschine in einem Teillastbetrieb betrieben wird.

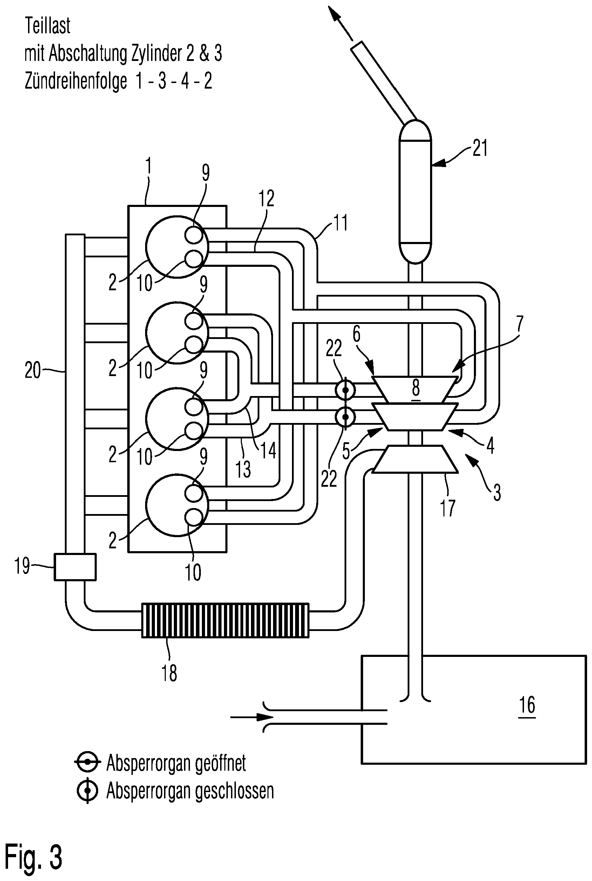

Figur 3 zeigt eine dritte Betriebsart für die erfindungsgemäße, vierzylindrige Brennkraftmaschine 1. Auch hier ist für jedes Gaswechsel-Auslassventil 9, 10 ist jeweils ein eigenes Abgasrohr 11, 12, 13, 14 vorgesehen, wobei jeweils ein Auslass-Gaswechselventil 9, 10 von zwei Zylindern 2 auf ein Abgasrohr 11, 12, 13, 14 zusammengeschalten sind und dann in vier Abgaseinlässe 4, 5, 6, 7 eines Abgasturboladers 3 münden. Somit werden jeweils zwei Zylinder 2 zu einer Zylindergruppe zusammengefasst. In diesem vorliegenden Ausführungsbeispiel die Zylinder 2 und 3 und die Zylinder 1 und 4. Auch hier erfolgt die Zusammenfassung entsprechend der Zündreihenfolge von Zylinder 1 zu Zylinder 3 zu Zylinder 4 zu Zylinder 2, mit einem gleichmäßigen Zündabstand. Bei einer abweichenden Zündreihenfolge erfolgt die Zylinderzusammenfassung wieder derart, dass ein gleichmäßiger Zündabstand vorliegt. Das dritte Ausführungsbeispiel unterscheidet sich von den ersten zwei Ausführungsbeispielen dadurch, dass nur noch zwei Zylinder 2, nämlich die Zylinder 1 und 4 (gemäß der Zündreihenfolge nummeriert) betreiben werden. Mit dieser Konfiguration, auch Zylinderabschaltung genannt, ist ein Verfahren zum Betreiben der erfindungsgemäßen Brennkraftmaschine 1 darstellbar, wobei bei niedriger Last der Brennkraftmaschine 1 für eine Zylindergruppe beide Absperrorgane 22 geschlossen werden. Die Absperrorgane 22 können auch für die andere Zylindergruppe vorgesehen werden.

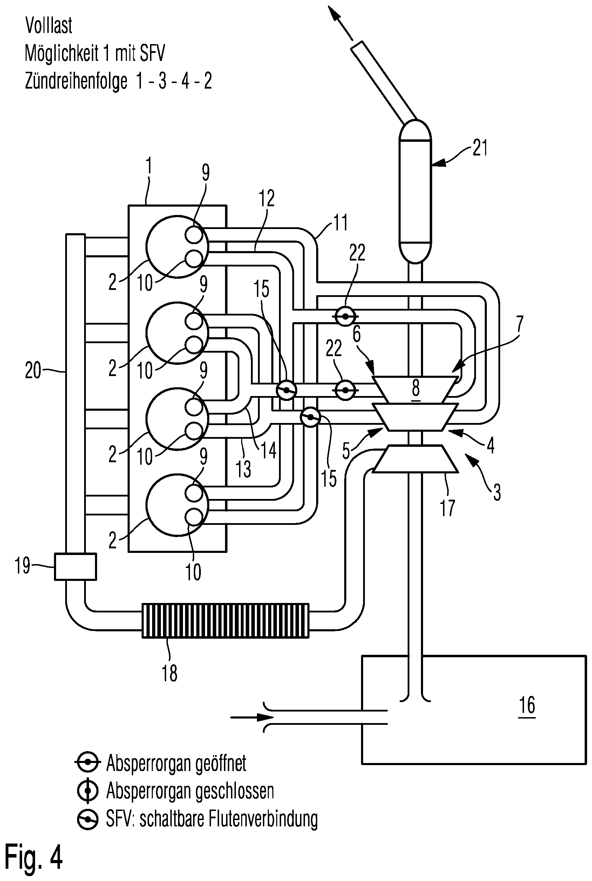

Figur 4 zeigt eine vierte Betriebsart für die erfindungsgemäße, vierzylindrige Brennkraftmaschine 1. Das Ausführungsbeispiel in Figur 4 entspricht dem Ausführungsbeispiel aus Fig. 3, unterscheidet sich jedoch von den ersten drei Ausführungsbeispielen dadurch, dass schaltbare Flutenverbindungen 15 vorgesehen sind, die die Flutentrennung der Zylindergruppen 1 und 4 sowie 2 und 3 aufheben. Hierdurch wird der Abgasgegendruck der Brennkraftmaschine 1 in vorteilhafter Weise nochmals weiter auf das Niveau einer Mono-Scroll Turbine reduziert.

Für alle Figuren 1 bis 4 gilt, dass das Turbinengehäuse über zwei Twin-Scroll Abgaseinlässe verfügt, deren Abgastrennung bis an das Turbinenlaufrad reicht. Jedoch können die Fluten mittels der Flutenverbindungen 15 miteinander Gas führend miteinander verbunden werden, um bei hoher oder Volllast der Brennkraftmaschine 1 den Abgasgegendruck weiter abzusenken. Bevorzugt ist hierbei die Abgasturbine 8 eine sogenannte Doppelturbine.

Das Abschalten der Fluten kann grundsätzlich über die Absperrorgane 22 erfolgen. Der Einsatz ist prinzipiell bei Reihenvierzylinder-, und Reihensechszylinder-Brennkraftmaschinen, sowie bei Achtzylinder- und Zwölfzylinder-Brennkraftmaschinen mit V-Bauform mit je einem Turbolader pro Zylinderbank möglich.

Die Erfindung ermöglicht in vorteilhafter Weise die Nutzung einer Teilturbine (ein axialer Abschnitt der Turbine 8) mit besserer Ausnutzung des Abgasimpulses und der Aufrechterhaltung der Flutentrennung und auch Schaltungen für z. B. den Betrieb mit einem abgeschalteten Zylinder, sowie durch Umschalten die Nutzung der gesamten Turbine zur Erzielung der Nennleistung. Damit kann z. B. die Turbine insgesamt größer ausgelegt werden, um den Gegendruck in der Nennleistung zu reduzieren und gleichzeitig in der Teillast einen höheren Auflade- und Wirkungsgrad zu erreichen.

### Bezugszeichenliste

- 1: Brennkraftmaschine
- 2: Zylinder
- 3: Abgasturbolader
- 4: Abgaseinlass
- 5.: Abgaseinlass
- 6.: Abgaseinlass
- 7.: Abgaseinlass
- 8.: Abgasturbine
- 9.: Gaswechsel-Auslassventil
- 10.: Gaswechsel-Auslassventil
- 11.: Abgasrohr
- 12.: Abgasrohr
- 13.: Abgasrohr
- 14.: Abgasrohr
- 15.: Flutenverbindung
- 16.: Ansauggeräuschdämpfer
- 17.: Verdichter
- 18.: Ladeluftkühler
- 19.: Drosselklappe
- 20.: Luftsammler
- 21.: Abgasreinigungsanlage
- 22.: Absperrorgan

## Patentansprüche

1. Brennkraftmaschine (1) mit zumindest vier Zylindern (2) und mit einem Abgasturbolader (3) mit einem Turbinengehäuse mit vier Abgaseinlässen (4, 5, 6, 7), in dem eine Abgasturbine (8) drehbar angeordnet ist, wobei jeder Zylinder (2) zwei Gaswechsel-Auslassventile (9, 10) aufweist,
wobei je zwei Zylinder (2) zu einer Zylindergruppe zusammengefasst sind und jeder Abgaseinlass (4, 5, 6, 7) mit einer Zylindergruppe durch ein Abgasrohr (11, 12, 13, 14) über je ein Gaswechsel-Auslassventil (9, 10) je Zylinder (2) Abgas führend verbindbar ist und die Abgasturbine (8) alle 180° Kurbelwinkel mit Abgas beaufschlagbar ist, wobei ein gemeinsames Abgasrohr (11, 12, 13, 14) je Zylindergruppe oder beide gemeinsamen Abgasrohre (11, 12, 13, 14) einer Zylindergruppe ein in dem Abgasrohr (12, 13, 14) befindliches Absperrorgan (22) aufweist bzw. aufweisen.

2. Brennkraftmaschine, welche sechs Zylinder (2) aufweist, mit einem Abgasturbolader (3) mit einem Turbinengehäuse mit vier Abgaseinlässen (4, 5, 6, 7), in dem eine Abgasturbine (8) drehbar angeordnet ist, wobei jeder Zylinder (2) zwei Gaswechsel-Auslassventile (9, 10) aufweist,
wobei je drei Zylinder (2) zu einer Zylindergruppe zusammengefasst sind und jeder Abgaseinlass (4, 5, 6, 7) mit einer Zylindergruppe durch ein Abgasrohr (11, 12, 13, 14) über je ein Gaswechsel-Auslassventil (9, 10) je Zylinder (2) Abgas führend verbindbar ist und die Abgasturbine (8) alle 120° Kurbelwinkel mit Abgas beaufschlagbar ist, wobei ein gemeinsames Abgasrohr (11, 12, 13, 14) je Zylindergruppe oder beide gemeinsamen Abgasrohre (11, 12, 13, 14) einer Zylindergruppe ein in dem Abgasrohr (12, 13, 14) befindliches Absperrorgan (22) aufweist bzw. aufweisen.

3. Brennkraftmaschine nach einem der Patentansprüche 1 oder 2,
wobei das Abgas einer Zylindergruppe mit dem Abgas der anderen Zylindergruppe über eine Flutenverbindung (15) (11, 12, 13, 14) verbindbar ist.

4. Brennkraftmaschine nach einem der Patentansprüche 1 bis 3,
wobei das Turbinengehäuse über zwei Twin-Scroll Abgaseinlässe verfügt.

5. Brennkraftmaschine nach einem der Patentansprüche 1 bis 3,
wobei die Abgasturbine (8) eine Doppelturbine ist.

6. Verfahren zum Betreiben einer Brennkraftmaschine nach Patentanspruch 1 oder 2,
wobei bei niedriger Last der Brennkraftmaschine (1) die Absperrorgane (22) geschlossen werden.

7. Verfahren zum Betreiben einer Brennkraftmaschine nach Patentanspruch 3,
wobei bei hoher Last der Brennkraftmaschine die Absperrorgane (22) geöffnet werden.

8. Verfahren zum Betreiben einer Brennkraftmaschine nach Patentanspruch 3,
wobei bei hoher Last der Brennkraftmaschine die Flutenverbindungen (15) geöffnet werden.

## Claims

1. Combustion engine (1) having at least four cylinders (2) and having an exhaust-gas turbocharger (3) having a turbine housing which has four exhaust-gas inlets (4, 5, 6, 7) and in which an exhaust-gas turbine (8) is rotatably disposed, wherein each cylinder (2) has two charge-cycle outlet valves (9, 10), wherein two cylinders (2) are in each case combined so as to form one cylinder group, and each exhaust-gas inlet (4, 5, 6, 7) by way of in each case one charge-cycle outlet valve (9, 10) per cylinder (2) is connectable in an exhaust-gas conducting manner to one cylinder group by one exhaust-gas pipe (11, 12, 13, 14), and the exhaust-gas turbine (8) in terms of the crank angle is able to be impinged with exhaust gas every 180°, wherein a common exhaust-gas pipe (11, 12, 13, 14) per cylinder group, or both common exhaust-gas pipes (11, 12, 13, 14) of one cylinder group, has or have, respectively, one shut-off member (22) that is situated in the exhaust-gas pipe (12, 13, 14).

2. Combustion engine which has six cylinders (2), having an exhaust-gas turbocharger (3) which has four exhaust-gas inlets (4, 5, 6, 7) and in which an exhaust-gas turbine (8) is rotatably disposed, wherein each cylinder (2) has two charge-cycle outlet valves (9, 10), wherein three cylinders (2) are in each case combined so as to form one cylinder group, and each exhaust-gas inlet (4, 5, 6, 7) by way of in each case one charge-cycle outlet valve (9, 10) per cylinder (2) is able to be connected in an exhaust-gas conducting manner to one cylinder group by one exhaust-gas pipe (11, 12, 13, 14), and the exhaust-gas turbine (8) in terms of the crank angle is able to be impinged with exhaust gas every 120°, wherein a common exhaust-gas pipe (11, 12, 13, 14) per cylinder group, or both common exhaust-gas pipes (11, 12, 13, 14) per cylinder group, has or have, respectively, one shut-off member (22) that is situated in the exhaust-gas pipe (12, 13, 14).

3. Combustion engine according to one of Patent Claims 1 or 2, wherein the exhaust gas of one cylinder group by way of a venting connection (15) (11, 12, 13, 14) is able to be connected with the exhaust gas of the other cylinder group.

4. Combustion engine according to one of Patent Claims 1 to 3, wherein the turbine housing possesses two twin-scroll exhaust-gas inlets.

5. Combustion engine according to one of Patent Claims 1 to 3, wherein the exhaust-gas turbine (8) is a double turbine.

6. Method for operating a combustion engine according to Patent Claim 1 or 2, wherein the shut-off members (22) are closed when the combustion engine (1) is under low load.

7. Method for operating a combustion engine according to Patent Claim 3, wherein the shut-off members (22) are opened when the combustion engine (1) is under high load.

8. Method for operating a combustion engine according to Patent Claim 3, wherein the venting connections (15) are opened when the combustion engine is under high load.

## Revendications

1. Moteur à combustion interne (1) comprenant au moins quatre cylindres (2) et un turbocompresseur à gaz d'échappement (3) muni d'un carter de turbine à quatre entrées de gaz d'échappement (4, 5, 6, 7) dans lequel une turbine à gaz d'échappement (8) est disposée de manière rotative, chaque cylindre (2) comportant deux soupapes de sortie d'échange de gaz (9, 10), les cylindres (2) étant combinés deux par deux pour former un groupe de cylindres et chaque entrée de gaz d'échappement (4, 5, 6, 7) pouvant être reliée à un groupe de cylindres de manière à conduire les gaz d'échappement à travers un tube de gaz d'échappement (11, 12, 13, 14) par le biais d'une soupape de sortie d'échange de gaz (9, 10) par cylindre (2) et la turbine à gaz d'échappement (8) pouvant être soumise aux gaz d'échappement à chaque angle de vilebrequin de 180°, un tube de gaz d'échappement commun (11, 12, 13, 14) par groupe de cylindres ou les deux tubes de gaz d'échappement communs (11, 12, 13, 14) d'un groupe de cylindres comportant un organe d'arrêt (22) situé dans le tube de gaz d'échappement (12, 13, 14).

2. Moteur à combustion interne à six cylindres (2), ledit moteur comprenant un turbocompresseur à gaz d'échappement (3) muni d'un carter de turbine à quatre entrées de gaz d'échappement (4, 5, 6, 7) dans lequel une turbine à gaz d'échappement (8) est disposée en rotation,
chaque cylindre (2) comportant deux soupapes de sortie d'échange de gaz (9, 10), les cylindres (2) étant combinés trois par trois pour former un groupe de cylindres et chaque entrée de gaz d'échappement (4, 5, 6, 7) pouvant être reliée à un groupe de cylindres de manière à conduire les gaz d'échappement à travers un tube de gaz d'échappement (11, 12, 13, 14) par le biais d'une soupape de sortie d'échange de gaz (9, 10) par cylindre (2) et la turbine à gaz d'échappement (8) pouvant être soumise aux gaz d'échappement à chaque angle de vilebrequin de 120°, un tube de gaz d'échappement commun (11, 12, 13, 14) par groupe de cylindres ou les deux tubes de gaz d'échappement communs (11, 12, 13, 14) d'un groupe de cylindres comportant un organe d'arrêt (22) situé dans le tube de gaz d'échappement (12, 13, 14).

3. Moteur à combustion interne selon l'une des revendications 1 ou 2,
les gaz d'échappement d'un groupe de cylindres pouvant être reliés aux gaz d'échappement de l'autre groupe de cylindres par le biais d'une liaison d'écoulement (15) (11, 12, 13, 14).

4. Moteur à combustion interne selon l'une des revendications 1 à 3, le carter de turbine disposant de deux entrées d'échappement à double volute.

5. Moteur à combustion interne selon l'une des revendications 1 à 3, la turbine à gaz d'échappement (8) étant une double turbine.

6. Procédé de fonctionnement d'un moteur à combustion interne selon la revendication 1 ou 2, les organes d'arrêt (22) étant fermés lorsque le moteur à combustion interne (1) est sous faible charge.

7. Procédé de fonctionnement d'un moteur à combustion interne selon la revendication 3, les organes d'arrêt (22) étant ouverts lorsque le moteur à combustion interne est sous une charge élevée.

8. Procédé de fonctionnement d'un moteur à combustion interne selon la revendication 3, les liaisons d'écoulement (15) étant ouvertes lorsque le moteur à combustion interne est sous une charge élevée.
